# EUROPÄISCHE PATENTSCHRIFT

(11) **EP 1 475 877 B1**
(45) Veröffentlichungstag und Bekanntmachung des Hinweises auf die Patenterteilung: **03.06.2009**
(21) Anmeldenummer: 04005265.6
(22) Anmeldetag: 05.03.2004
(51) Int. Cl.: H02J 7/00, H02J 1/00

(54) **Verfahren zur Ansteuerung des Bordnetzes eines Kraftfahrzeuges**
Method of control for a vehicle electrical system
Procédé de commande d'un réseau de bord de vehicule

(30) Priorität: 09.05.2003 DE 10320952
(43) Veröffentlichungstag der Anmeldung: 10.11.2004
(73) Patentinhaber: AUDI AG, 85045 Ingolstadt (DE)
(72) Erfinder: Wolf, Norbert, 85055 Ingolstadt (DE)
(74) Vertreter: Mader, Wilfried

(56) Entgegenhaltungen:
- DE-A1- 10 033 317
- US-A- 5 583 440
- US-A- 6 049 141

## Beschreibung

Die Erfindung betrifft ein Verfahren zur Ansteuerung des Bordnetzes eines Kraftfahrzeugs gemäß dem Oberbegriff des Patentanspruchs 1, wie es aus der DE 100 33 317 A1 bekannt ist.
Mit zunehmendem Einsatz sicherheitsrelevanter Verbraucher in Kraftfahrzeugen (bsp. elektrohydraulische Bremsen, Insassenrückhaltesysteme o.ä.) steigt die Bedeutung der zuverlässigen elektrischen Energieversorgung der Verbraucher durch das mindestens eine von einem Generator gespeiste Kraftfahrzeugbatterie aufweisende Bordnetz des Kraftfahrzeugs. Da übliche Kraftfahrzeugbatterien (Bordnetzbatterien) prinzipbedingt nur eine begrenzte Lebensdauer besitzen, sind für den Fall von Unterspannungen im Bordnetz Notstrombatterien zur Energieversorgung insbesondere der sicherheitsrelevanten Verbraucher des Kraftfahrzeugs gebräuchlich. Die Kopplung der Notstrombatterie an das Bordnetz des Kraftfahrzeugs kann dabei mit geeigneten Schaltelementen wie Halbleiterschalter oder Relais erfolgen.
Die bei vielen sicherheitsrelevanten Verbrauchern des Kraftfahrzeugs benötigte hohe Dynamik in der Energieversorgung kann mit dem gattungsgemäßen Verfahren beim Gebrauch der Notstrombatterie nur schwierig mit hohem Aufwand und mit hohen Kosten realisiert werden.

Der Erfindung liegt die Aufgabe zugrunde, ein Verfahren zur Ansteuerung des Bordnetzes eines Kraftfahrzeugs gemäß dem Oberbegriff des Patentanspruchs 1 anzugeben, bei dem eine zuverlässige Energieversorgung der Verbraucher des Kraftfahrzeugs auf einfache Weise mit geringen Kosten bereitgestellt wird.
Diese Aufgabe wird erfindungsgemäß durch das Kennzeichen des Patentanspruchs 1 gelöst.
Vorteilhafte Ausgestaltungen der Erfindung sind Bestandteil der weiteren Patentansprüche.

Erfindungsgemäß wird zur Gewährleistung einer erforderlichen Mindestspannung im Bordnetz des Kraftfahrzeugs und damit zur zuverlässigen elektrischen Energieversorgung der ans Bordnetz angeschlossenen Verbraucher (insbesondere zur zuverlässigen Energieversorgung mindestens eines sicherheitsrelevanten Verbrauchers) die Notstrombatterie dem Bordnetz des Kraftfahrzeugs bedarfsgerecht zugeschaltet, d.h. in Abhängigkeit des aktuellen Auslastungsgrads des Generators (der Auslastungsgrad des Generators ist hierbei durch das prozentuale Verhältnis zwischen der Leistungsaufnahme der ans Bordnetz angeschlossenen Verbraucher und der momentanen Leistungsfähigkeit des Generators bestimmt) und des vom Spannungszustand des Bordnetzes abhängigen Betriebsmodus des Bordnetzes. Beim Unterschreiten eines Schwellwerts für den Auslastungsgrad des Generators, d.h. bei gering ausgelastetem Generator, ist die Notstrombatterie dem Bordnetz unabhängig vom Spannungszustand des Bordnetzes und damit unabhängig vom Betriebsmodus des Bordnetzes immer zugeschaltet, d.h. sowohl im Normalbetrieb bei normalem Spannungszustand im Bordnetz (Puffern der ans Bordnetz angebundenen Verbraucher durch die Kraftfahrzeugbatterie möglich), als auch im Notbetrieb im Falle einer Unterspannung im Bordnetz (diese ist bsp. durch einen Ausfall oder einen Defekt der Kraftfahrzeugbatterie bedingt) bei einer Versorgung der ins Bordnetz eingebundenen Verbraucher durch die Notstrombatterie. Beim Überschreiten des Schwellwerts für den Auslastungsgrad des Generators, d.h. bei hoch ausgelastetem Generator, wird die Notstrombatterie dem Bordnetz abhängig vom Spannungszustand des Bordnetzes und daher abhängig vom Betriebsmodus nur im Falle einer Unterspannung im Bordnetz zugeschaltet (nur im Notbetrieb), während die Notstrombatterie dem Bordnetz bei normalem Spannungszustand (im Normalbetrieb) nicht zugeschaltet wird. Als Unterspannung des Bordnetzes, d.h. als Kriterium für den Übergang vom Normalbetrieb zum Notbetrieb, wird hierbei das Unterschreiten eines bestimmten Spannungswerts für die Spannung im Bordnetz herangezogen. Der Schwellwert für den Auslastungsgrad des Generators wird in Abhängigkeit der Größe des Generators und abhängig von den zu versorgenden Verbrauchern, insbesondere abhängig von zu versorgenden sicherheitsrelevanten Verbrauchern gewählt, bsp. wird der Schwellwert bei einem Auslastungsgrad des Generators von 75 % festgelegt.
Das Zuschalten der Notstrombatterie zum Bordnetz (und ebenso das Wegschalten der Notstrombatterie vom Bordnetz) wird über ein geeignetes Schaltelement vorgenommen, bsp. über ein Relais. Zur Diagnose der Leistungsfähigkeit der Notstrombatterie kann die Spannung der Notstrombatterie überwacht werden. Zusätzlich kann der Notstrombatterie ein Verbraucher mit definierten Eigenschaften zugeschaltet werden, bsp. über ein Relais. Die Ansteuerung des Bordnetzes (Auswertung des Spannungszustands im Bordnetz, Zuschalten der Notstrombatterie zum Bordnetz und Wegschalten der Notstrombatterie aus dem Bordnetz durch Steuerung geeigneter Schaltelemente, Diagnose des Zustands bzw. der Leistungsfähigkeit der Notstrombatterie) kann über ein im Kraftfahrzeug vorgesehenes (insbesondere über ein ins Bordnetz eingebundenes) Steuergerät erfolgen, insbesondere über ein Steuergerät für das Batterieenergiemanagement.

Mit dem vorgestellten Verfahren ist eine einfache und kostengünstige sowie zuverlässige Ansteuerung des Bordnetzes eines Kraftfahrzeugs möglich, da eine aufwendige und zudem oft fehlerhafte Diagnose der Kraftfahrzeugbatterie nicht erforderlich ist. Für die Zuschaltung der Notstrombatterie zum Bordnetz können einfache Schaltelemente verwendet werden, insbesondere sind hierzu keine teuren Leistungshalbleiterbauelemente notwendig. Da die Notstrombatterie bei einem geringen Auslastungsgrad des Generators unabhängig vom Betriebsmodus des Bordnetzes immer geladen wird, besitzt diese Notstrombatterie immer einen hohen Ladezustand und damit auch eine hohe Lebensdauer. Die Leistungsfähigkeit der Notstrombatterie kann auf einfache Weise diagnostiziert werden, wobei im Bedarfsfall (insbesondere beim Unterschreiten bestimmter Schwellwerte für die Kapazität o.ä.) geeignete Maßnahmen ergriffen werden können (bsp. können Warnanzeigen etc. abgegeben werden).

Im Zusammenhang mit der Zeichnung soll ein Ausführungsbeispiel der Erfindung erläutert werden. Hierbei zeigt
- Figur 1: das Prinzipschaltbild des Bordnetzes eines Kraftfahrzeugs,
- Figur 2: den zeitlichen Verlauf der für einen Verbraucher vom Bordnetz bereitgestellten Spannung.

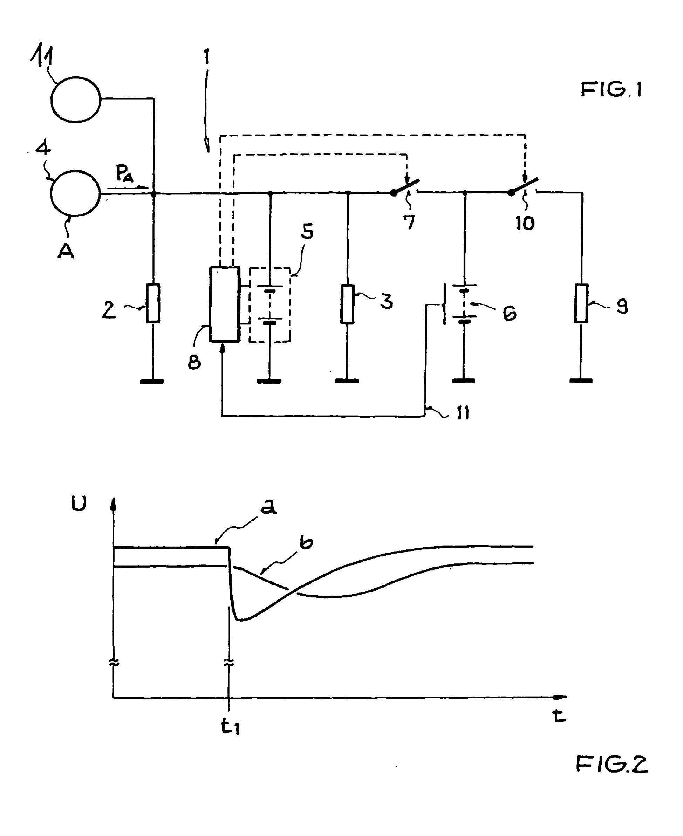

Gemäß der Figur 1 ist im Bordnetz 1 eines Kraftfahrzeugs eine von einem Generator 4 mit konstanter Ausgangsleistung P_{A} gespeiste Kraftfahrzeugbatterie 5 zur elektrischen Energieversorgung der Verbraucher 2, 3 vorgesehen, bsp. zur Versorgung des herkömmlichen Verbrauchers 2 des Kraftfahrzeugs und des bsp. als elektrohydraulische Bremse ausgebildeten sicherheitsrelevanten Verbrauchers 3 des Kraftfahrzeugs. Zur elektrischen Energieversorgung der Verbraucher 2, 3 bei Unterspannungen im Bordnetz 1, d.h. falls vom Normalbetrieb in den Notbetrieb übergegangen wird, bsp. infolge eines Ausfalls oder Defekts der Kraftfahrzeugbatterie 5 oder des Generators 4, ist die Notstrombatterie 6 vorgesehen, die insbesondere zur Stromversorgung des sicherheitsrelevanten Verbrauchers 3 dient. Der mit dem Bordnetz 1 des Kraftfahrzeugs und dem Generator 4 verbundene Starter 11 ist zum Starten des Kraftfahrzeugs vorgesehen. Hierbei wird die Ansteuerung des Bordnetzes 1, insbesondere das Zuschalten des Notstrombatterie 6 zum Bordnetz 1 mittels des Schaltelements 7, vom für das Batterieenergiemanagement des Kraftfahrzeugs zuständige Steuergerät 8 in Abhängigkeit des Auslastungsgrades A des Generators 4 gesteuert, d.h. in Abhängigkeit des prozentualen Verhältnisses des Leistungsbedarfs der Verbraucher 2, 3 im Bordnetz 1 zu der vom Generator 4 momentan abgebbaren konstanten Ausgangsleistung P_{A}.
Beim Unterschreiten eines bestimmten Schwellwerts des Auslastungsgrads A des Generators 4, bsp. beim Unterschreiten eines Auslastungsgrads A des Generators 4 von 75 %, d.h. bei einem geringen Auslastungsgrad des Generators 4, ist das bsp. als Koppelrelais ausgebildete Schaltelement 7 immer geschlossen, d.h. sowohl im Normalbetrieb bei Versorgung der Verbraucher 2, 3 durch die Kraftfahrzeugbatterie 5 als auch im Notbetrieb bei Versorgung der Verbraucher 2, 3 durch die Notstrombatterie 6; die Notstrombatterie 6 wird daher bei geringem Auslastungsgrad A des Generators 4 permanent über den Generator 4 geladen. Wird bei einem Defekt der Kraftfahrzeugbatterie 5 dem Bordnetz 1 ein weiterer Verbraucher zugeschaltet (Zeitpunkt t1 in Figur 2), insbesondere falls ein Hochstromverbraucher dem Bordnetz 1 zugeschaltet wird, kann die Spannung U im Bordnetz 1 ,insbesondere für den sicherheitsrelevanten Verbraucher 3, die erforderliche Mindestspannung im Bordnetz 1 über die Notstrombatterie 6 gehalten werden (siehe Verlauf der Kurve (a) in Figur 2).
Beim Überschreiten eines bestimmten Schwellwerts des Auslastungsgrads A des Generators 4, bsp. beim Überschreiten eines Auslastungsgrads A des Generators 4 von 75 %, d.h. bei einem hohen Auslastungsgrad des Generators 4, ist das bsp. als Koppelrelais ausgebildete Schaltelement 7 im Normalbetrieb geöffnet; da alleine die Kraftfahrzeugbatterie 5 das Bordnetz 1 puffert, wird die Notstrombatterie 6 geschont. Wird bei einem Defekt der Kraftfahrzeugbatterie 5 dem Bordnetz 1 ein weiterer Verbraucher zugeschaltet (Zeitpunkt t1 in Figur 2), insbesondere falls ein Hochstromverbraucher dem Bordnetz 1 zugeschaltet wird, ist im Bordnetz 1 bereits genügend Energie gespeichert, so dass kurzzeitige Spitzen im Leistungsbedarf über das Bordnetz 1 abgepuffert werden. Die Spannung U im Bordnetz 1 sinkt bei hoch ausgelastetem Generator 4 durch diesen Puffereffekt langsam genug (siehe Verlauf der Kurve (b) in Figur 2), um im Notbetrieb die Notstrombatterie 6 dem Bordnetz 1 über das Koppelrelais 7 zuzuschalten und demnach zum Puffern des sicherheitsrelevanten Verbrauchers 3 heranziehen.
Zur Diagnose der Notstrombatterie 6 kann die Spannung der Notstrombatterie 6 erfasst werden und in allen Phasen überwacht werden, in denen das Schaltelement 7 nicht geschlossen ist (das Koppelrelais 7 nicht aktiviert ist); hierzu ist die Verbindung 11 zwischen der Notstrombatterie 6 und dem Steuergerät 8 vorgesehen. Zur Verbesserung der Diagnosemöglichkeit für die Notstrombatterie 6 kann durch das bsp. als Relais ausgebildete Schaltelement 10 ein definierter Verbraucher 9 als Testverbraucher auf die Notstrombatterie 6 geschaltet werden, so dass bsp. mittels Kennlinienfeldern eine Aussage über die Leistungsfähigkeit der Notstrombatterie 6 getroffen werden kann; bsp. kann eine Information (bsp. als optische Warnanzeige oder als akustisches Warnsignal) dann erfolgen, wenn eine bestimmte vorgegebene Mindestspannung in Abhängigkeit der Temperatur unterschritten wird. Hierbei kann das für das Batterieenergiemanagement des Kraftfahrzeugs verantwortliche Steuergerät 8 auch die Steuerung des Schaltelements (Relais) 10 und die Diagnose der Notstrombatterie 6 übernehmen.

## Patentansprüche

1. Verfahren zur Ansteuerung des Bordnetzes (1) eines Kraftfahrzeugs, bei dem eine von einem Generator (4) gespeiste Kraftfahrzeugbatterie (5) zur Versorgung mindestens eines Verbrauchers (2, 3) des Kraftfahrzeugs sowie eine Notstrombatterie (6) vorgesehen sind,
**dadurch gekennzeichnet,**
**dass** die Notstrombatterie (6) dem Bordnetz (1) in Abhängigkeit des Auslastungsgrads (A) des Generators (4) zugeschaltet wird.

2. Verfahren nach Anspruch 1, **dadurch gekennzeichnet, dass** die Notstrombatterie (6) dem Bordnetz (1) in Abhängigkeit des vom Spannungszustand des Bordnetzes (1) abhängigen Betriebsmodus des Bordnetzes (1) zugeschaltet wird.

3. Verfahren nach Anspruch 1 oder 2, **dadurch gekennzeichnet, dass** beim Unterschreiten eines Schwellwerts für den Auslastungsgrad (A) des Generators (4) die Notstrombatterie (6) dem Bordnetz (1) bei jedem Spannungszustand des Bordnetzes (1) und allen Betriebsmodi des Bordnetzes (1) zugeschaltet wird.

4. Verfahren nach einem der Ansprüche 1 bis 3, **dadurch gekennzeichnet, dass** beim Überschreiten des Schwellwerts für den Auslastungsgrad (A) des Generators (4) die Notstrombatterie (6) dem Bordnetz (1) im Notbetrieb bei einer Unterspannung im Bordnetz (1) zugeschaltet wird.

5. Verfahren nach einem der Ansprüche 1 bis 4, **dadurch gekennzeichnet, dass** der Wechsel vom Normalbetrieb zum Notbetrieb beim Unterschreiten eines bestimmten Spannungswerts der Spannung im Bordnetz (1) vorgegeben wird.

6. Verfahren nach einem der Ansprüche 3 bis 5, **dadurch gekennzeichnet, dass** der Schwellwert für den Auslastungsgrad (A) des Generators (4) im Bereich von 60 % bis 90 % vorgegeben wird.

7. Verfahren nach Anspruch 6, **dadurch gekennzeichnet, dass** ein Schwellwert für den Auslastungsgrad (A) des Generators (4) von 75 % vorgegeben wird.

8. Verfahren nach einem der Ansprüche 1 bis 7, **dadurch gekennzeichnet**, **dadurch gekennzeichnet, dass** die Ansteuerung des Bordnetzes (1) des Kraftfahrzeugs mittels eines Steuergeräts (8) für das Batterieenergiemanagement des Kraftfahrzeugs erfolgt.

9. Verfahren nach einem der Ansprüche 1 bis 8, **dadurch gekennzeichnet, dass** die Notstrombatterie (6) dem Bordnetz (1) über ein Schaltelement (7) zugeschaltet wird.

10. Verfahren nach Anspruch 9, **dadurch gekennzeichnet, dass** die Notstrombatterie (6) dem Bordnetz (1) über ein Relais (7) zugeschaltet wird.

11. Verfahren nach einem der Ansprüche 1 bis 10, **dadurch gekennzeichnet, dass** zur Diagnose der Leistungsfähigkeit der Notstrombatterie (6) ein Verbraucher (9) mit definierten Eigenschaften der Notstrombatterie (6) zugeschaltet wird.

12. Verfahren nach einem der Ansprüche 1 bis 11 zur Ansteuerung eines Bordnetzes (1) mit mindestens einem von einer Kraftfahrzeugbatterie (5) versorgten sicherheitsrelevanten Verbraucher (3).

## Claims

1. Method for controlling the electrical system (1) of a motor vehicle, wherein a vehicle battery (5) which is fed by a generator (4) to supply at least one consumer (2, 3) of the vehicle, and an emergency power battery (6), are provided, **characterised in that** the emergency power battery (6) is switched into the electrical system (1) depending on the capacity utilisation (A) of the generator (4).

2. Method according to claim 1, **characterised in that** the emergency power battery (6) is switched into the electrical system (1) depending on the operating mode of the electrical system (1) which depends on the voltage level of the electrical system (1).

3. Method according to claim 1 or 2, **characterised in that,** if a threshold value of the capacity utilisation (A) of the generator (4) is undershot, the emergency power battery (6) is switched into the electrical system (1) for every voltage condition of the electrical system (1) and all operating modes of the electrical system (1).

4. Method according to one of the claims 1 to 3, **characterised in that,** if the threshold value of the capacity utilisation (A) of the generator (4) is exceeded, the emergency power battery (6) is switched into the electrical system (1) in emergency operation in the event of an undervoltage in the electrical system (1).

5. Method according to one of the claims 1 to 4, **characterised in that** the change-over from normal operation to emergency operation takes place if the voltage on the electrical system (1) falls below a defined value.

6. Method according to one of the claims 3 to 5, **characterised in that** the threshold value for the capacity utilisation (A) of the generator (4) is pre-set in the range of 60% to 90%.

7. Method according to claim 6, **characterised in that** a threshold value for the capacity utilisation (A) of the generator (4) is pre-set at 75%.

8. Method according to one of the claims 1 to 7, **characterised in that** the control of the electrical system (1) of the vehicle is performed by means of a control device (8) for the battery energy management of the vehicle.

9. Method according to one of the claims 1 to 8, **characterised in that** the emergency power battery (6) is switched into the electrical system (1) by means of a switching element (7)

10. Method according to claim 9, **characterised in that** the emergency power battery (6) is switched into the electrical system (1) by means of a relay (7).

11. Method according to one of the claims 1 to 10, **characterised in that,** in order to diagnose the capacity of the emergency power battery (6), a load (9) with defined properties is connected to the emergency power battery (6).

12. Method according to one of the claims 1 to 11 for controlling an electrical system (1), comprising at least one safety-relevant consumer (3), which is supplied by a vehicle battery (5).

## Revendications

1. Procédé de commande du réseau de bord (1) d'un véhicule automobile, pour lequel une batterie de véhicule automobile (5) alimentée par un générateur (4) pour l'alimentation d'au moins un consommateur (2, 3) du véhicule automobile ainsi qu'une batterie de secours (6) sont prévues, **caractérisé en ce que** la batterie de secours (6) est raccordée au réseau de bord (1) en fonction du taux d'utilisation (A) du générateur (4).

2. Procédé selon la revendication 1, **caractérisé en ce que** la batterie de secours (6) est raccordée au réseau de bord (1) en fonction du mode de service du réseau de bord (1) dépendant de l'état de tension du réseau de bord (1).

3. Procédé selon la revendication 1 ou 2, **caractérisé en ce que** lors du passage sous une valeur seuil pour le taux d'utilisation (A) du générateur (4), la batterie de secours (6) est raccordée au réseau de bord (1) dans chaque état de tension du réseau de bord (1) et dans tous les modes de service du réseau de bord (1).

4. Procédé selon l'une quelconque des revendications 1 à 3, **caractérisé en ce que** lors du dépassement de la valeur seuil pour le taux d'utilisation (A) du générateur (4), la batterie de secours (6) est raccordée au réseau de bord (1) en régime de secours lors d'une sous-tension dans le réseau de bord (1).

5. Procédé selon l'une quelconque des revendications 1 à 4, **caractérisé en ce que** le passage du mode de service normal au régime de secours est prescrit lors du passage sous une valeur de tension déterminée de la tension dans le réseau de bord (1).

6. Procédé selon l'une quelconque des revendications 3 à 5, **caractérisé en ce que** la valeur seuil pour le taux d'utilisation (A) du générateur (4) est prescrite dans la plage de 60 à 90 %.

7. Procédé selon la revendication 6, **caractérisé en ce qu'**une valeur seuil pour le taux d'utilisation (A) du générateur (4) de 75 % est prescrite.

8. Procédé selon l'une quelconque des revendications 1 à 7, **caractérisé en ce que** le réseau de bord (1) du véhicule automobile est commandé à l'aide d'un appareil de commande (8) pour la gestion de l'énergie de la batterie du véhicule automobile.

9. Procédé selon l'une quelconque des revendications 1 à 8, **caractérisé en ce que** la batterie de secours (6) est raccordée au réseau de bord (1) par le biais d'un élément de commutation (7).

10. Procédé selon la revendication 9, **caractérisé en ce que** la batterie de secours (6) est raccordée au réseau de bord (1) par le biais d'un relais (7).

11. Procédé selon l'une quelconque des revendications 1 à 10, **caractérisé en ce qu'**un consommateur (9) aux propriétés définies est branché à la batterie de secours (6) pour le diagnostic de puissance de la batterie de secours (6).

12. Procédé selon l'une quelconque des revendications 1 à 11, pour la commande d'un réseau de bord (1) avec au moins un consommateur (3) de sécurité, alimenté par une batterie de véhicule automobile.
